# EUROPEAN PATENT APPLICATION

(11) **EP 4 706 859 A2**
(43) Date of publication of application: **11.03.2026**
(21) Application number: 25193656.3
(22) Date of filing: 04.08.2025
(51) Int. Cl.: B23K 9/02, B23K 9/095, B23K 9/173

(54) **WELDING APPARATUS**

(30) Priority: 05.09.2024 JP 2024152871
(71) Applicant: TOYOTA JIDOSHA KABUSHIKI KAISHA, Toyota-shi, Aichi-ken 471-8571 (JP)
(72) Inventor: KAWAKITA, Atsushi, Toyota-shi, 471-8571 (JP); MATSUO, Ryuta, Toyota-shi, 471-8571 (JP); SHIBATA, Shota, Kitakyushu-shi, 806-0004 (JP)
(74) Representative: TBK

(57) **Abstract**

Disclosed is a welding apparatus configured to suppress the occurrence of melting-off of molten metal. A welding apparatus (1) of the present disclosure includes: an arc welding unit (20) configured to perform arc welding, a moving mechanism for moving the arc welding unit (20), and a control unit configured to control execution of the arc welding and movement by the moving mechanism, in which the control unit is configured to: execute the arc welding for a first time period, which is predefined time period; stop the arc welding for a second time period, which is a predefined time period, so as to cool a welding point (55) formed by the arc welding; and move the arc welding unit (20) and resume execution of the arc welding after lapse of the second time period.

## Description

### BACKGROUND

The present disclosure relates to a welding apparatus, in particular, to a welding apparatus for arc welding.

Patent Literature 1 discloses an arc welding method in which welding is performed efficiently even in the case where inverted operation is impossible whereby a welding joint having excellent quake-resistance and fatigue resistance can be formed.

[Patent Literature 1] Japanese Unexamined Patent Application Publication No. 2013-184217

### SUMMARY

In arc welding, in order to form a weld bead of a required length, a linear weld bead was formed by performing continuous arc welding on the weld bead from the start position to the end position thereof. In this case, before the molten pool formed by the arc discharge is cooled and solidified, a large molten pool is formed next to the aforementioned molten pool due to the subsequent arc discharge, and there was a possibility that a molten metal could have melted off from this large molten pool.

The present disclosure has been made to solve such a problem mentioned above and provides a welding apparatus configured to suppress the occurrence of melting-off of molten metal.

According to the present disclosure, a welding apparatus includes: an arc welding unit configured to perform arc welding; a moving mechanism for moving the arc welding unit; and a control unit configured to control execution of the arc welding and movement by the moving mechanism, in which the control unit is configured to: execute the arc welding for a first time period, which is a predefined time period; stop the arc welding for a second time period, which is predefined time period, so as to cool a welding point formed by the arc welding; and move the arc welding unit and resume execution of the arc welding after lapse of the second time period.

With such a configuration, it is possible to suppress the occurrence of melting-off of molten metal.

The ratio of the second time period to the first time period may be 0.2 to 2.0. With such a configuration, molten pool is cooled and solidified while arc welding is being stopped to form a scaly weld bead, and the time taken to form a weld bead of a required length can be shortened.

The present disclosure provides a welding apparatus configured to suppress the occurrence of melting-off of molten metal.

The above and other objects, features and advantages of the present disclosure will become more fully understood from the detailed description given hereinbelow and the accompanying drawings.

### BRIEF DESCRIPTION OF DRAWINGS

Fig. 1 is a schematic diagram of a welding apparatus according to a first embodiment;
Fig. 2 is an explanatory diagram of phase 1 of a welding method implemented by a welding apparatus according to the present disclosure;
Fig. 3 is an explanatory diagram of phase 2 of a welding method implemented by a welding apparatus according to the present disclosure;
Fig. 4 is an explanatory diagram showing a weld bead formed by a welding method implemented by a welding apparatus according to the present disclosure;
Fig. 5 is an explanatory diagram showing lap welding with a welding torch directed downward;
Fig. 6 is an explanatory diagram showing butt welding;
Fig. 7 is an explanatory diagram showing lap welding being performed with a welding torch directed upward; and
Fig. 8 is a flowchart showing calculation processing executed by a computation unit.

### DESCRIPTION OF EMBODIMENTS

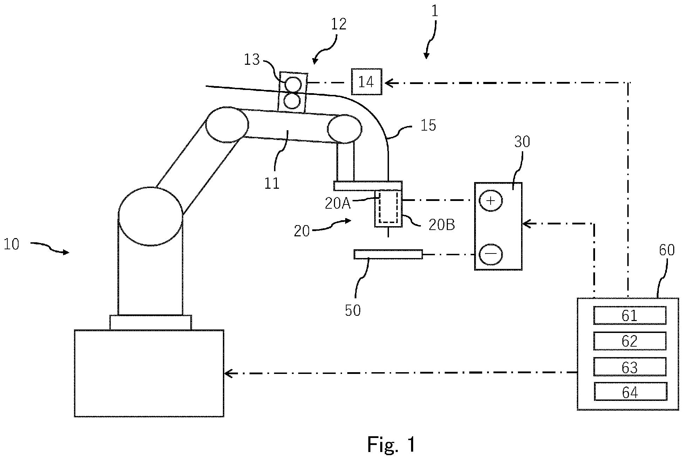

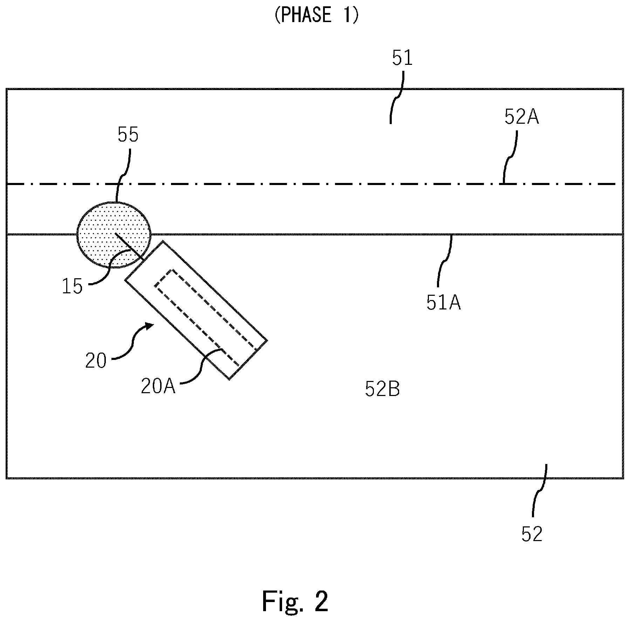

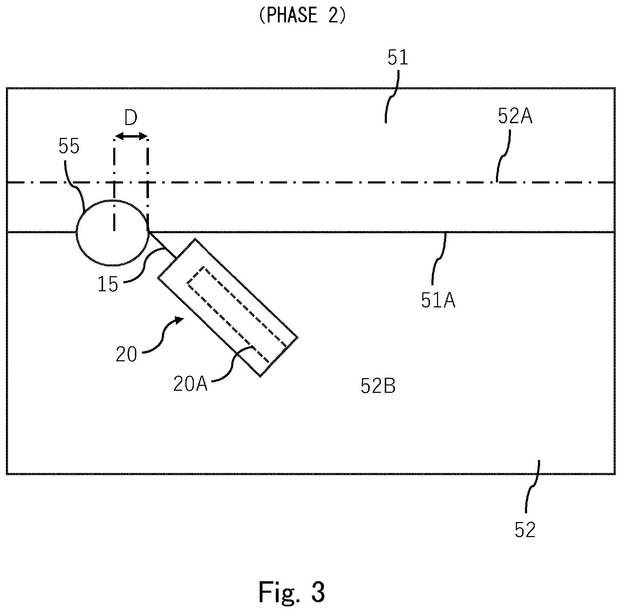

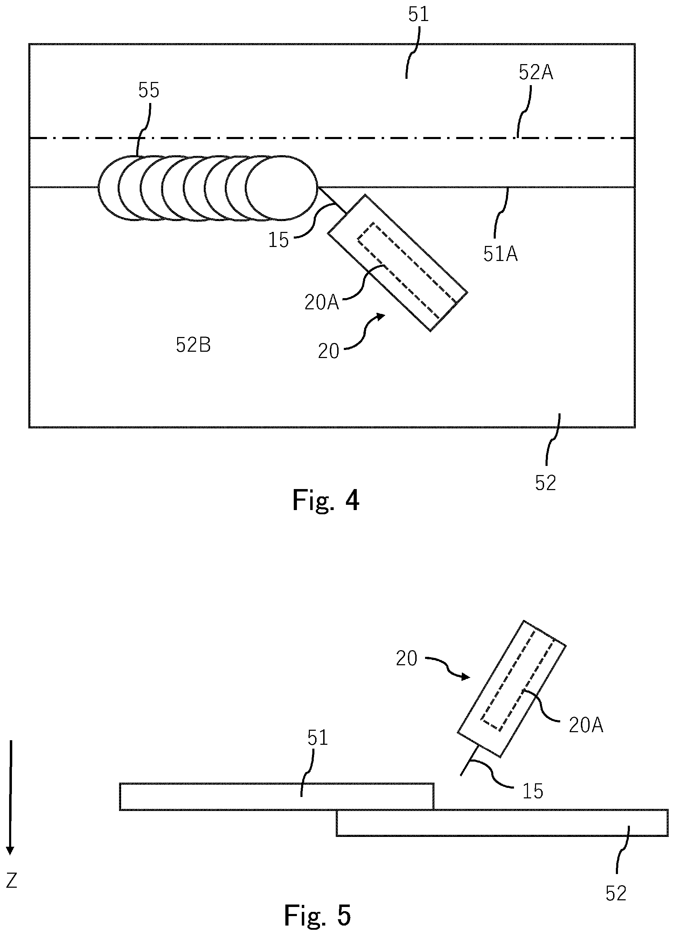

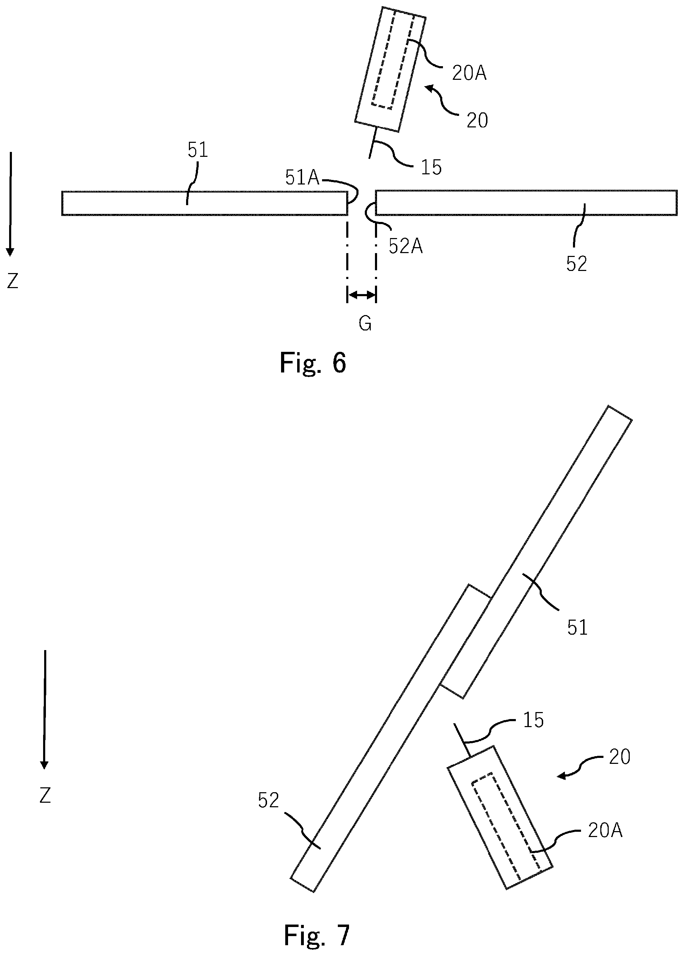

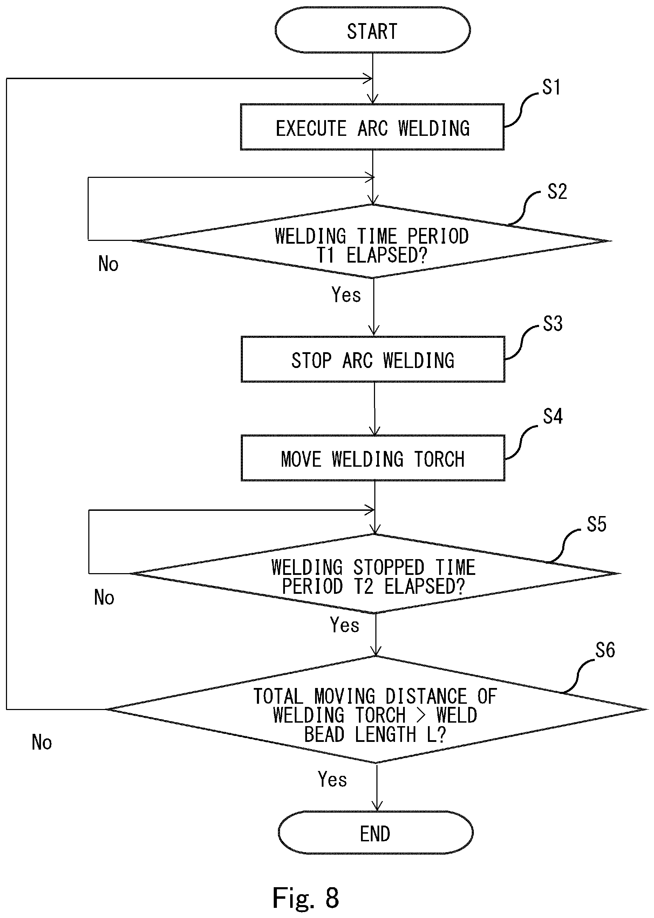

The embodiments of the present disclosure will be described below with reference to Figs. 1 to 8. Fig. 1 is a schematic configuration diagram of a welding apparatus according to a first embodiment. Fig. 2 is an explanatory diagram of phase 1 of a welding method implemented by a welding apparatus according to the present disclosure. Fig. 3 is an explanatory diagram of phase 2 of a welding method implemented by a welding apparatus according to the present disclosure. Fig. 4 is an explanatory diagram showing a weld bead formed by a welding method implemented by a welding apparatus according to the present disclosure. Fig. 5 is an explanatory diagram showing lap welding with a welding torch directed downward. Fig. 6 is an explanatory diagram showing butt welding. Fig. 7 is an explanatory diagram showing lap welding being performed with a welding torch directed upward. Fig. 8 is a flowchart showing calculation processing executed by a computation unit.

### First Embodiment

As shown in Fig. 1, a welding apparatus 1 includes a robot 10, a wire feeding unit 12, a welding torch 20, a power supply 30, and a control apparatus 60.

The robot 10 is an articulated robot having six rotating axes. The wire feeding unit 12 is attached to a robot arm 11 constituting the robot 10. The welding torch 20 is attached to the tip of the robot 10. The robot 10 moves the welding torch 20 by controlling the rotation direction and the rotation speed of the six rotating axes. The robot 10 is an example of a "moving mechanism for moving an arc welding unit" in the present disclosure.

As shown in Fig. 1, the wire feeding unit 12 includes a feed roller 13 for feeding a welding wire 15, which is a consumable electrode, to the welding torch 20, and a feed motor 14 for rotating the feed roller 13. The wire feeding unit 12 supplies the welding wire 15 to the welding torch 20 at a predetermined speed by rotating the feed roller 13 by the feed motor 14. As the welding wire 15, a solid wire made of low-carbon steel or high-tensile steel or a flux-cored wire is used.

As shown in Fig. 1, the welding torch 20 has a contact chip 20A and a gas nozzle 20B. The contact chip 20A is made of a metal material such as copper and has a cylindrical shape. The welding wire 15 is inserted into the contact chip 20A. Upon application of a welding current and a welding voltage from the power supply 30 to the contact chip 20A, an arc discharge occurs between the tip of the welding wire 15 and a member-to-be-welded 50 causing the welding wire 15 and the member-to-be-welded 50 to melt thereby forming a molten pool. In this way, arc welding is performed by the welding torch 20. The gas nozzle 20B has a cylindrical shape and surrounds the contact chip 20A. The gas nozzle 20B supplies shield gas such as argon to the welding part from a gas cylinder (not shown). The welding torch 20 is an example of an " arc welding unit configured to perform arc welding" in the present disclosure.

As shown in Fig. 1, the power supply 30 is connected to the contact chip 20A of the welding torch 20 and the member-to-be-welded 50 via a power supply cable, and outputs a welding current and a welding voltage.

As shown in Fig. 1, the control apparatus 60 includes a configuration unit 61, a memory 62, a computation unit 63, and a communication interface circuit 64. In performing arc welding with the welding apparatus 1, an operator inputs training data such as welding conditions to the configuration unit 61. The input training data (teaching information) is stored in the memory 62.

The control apparatus 60 executes arithmetic processing in the computation unit 63 based on the teaching information read from the memory 62. Based on the arithmetic result of the computation unit 63, the control apparatus 60 outputs command signals to the robot 10 and the power supply 30 via the communication interface circuit 64. Upon receiving the command signal, the robot 10 moves the welding torch 20 by controlling the direction and speed of rotation of the six rotating axes. Upon receiving the command signal, the power supply 30 outputs a welding current and a welding voltage to the contact chip 20A and the member-to-be-welded 50, or terminates the output. The control apparatus 60 also controls the feed motor 14 so that the welding wire 15 is fed to the welding torch 20 by the required feed amount. The control apparatus 60 is an example of a "control unit configured to control execution of arc welding and movement by the moving mechanism" in the present disclosure.

Next, the welding method implemented by the welding apparatus according to the present disclosure will be described with reference to Figs. 2 to 4. Figs. 2 to 4 are explanatory diagrams of an example in which the welding method implemented by the welding apparatus according to the present disclosure is applied to lap welding. The welding method implemented by the welding apparatus according to the present disclosure can be applied to welding other than lap welding.

First, a first member-to-be-welded 51 and a second member-to-be-welded 52 are superimposed, and the welding torch 20 is arranged on an edge part 51 A of the first member-to-be-welded 51. In Figs. 2 to 4, the first member-to-be-welded 51 is arranged on the front side of the drawing with respect to the second member-to-be-welded 52 (an edge part 52A of the second member-to-be-welded is shown by a dash-dotted line).

Then, welding current and welding voltage are applied from the power supply 30 to the contact chip 20A of the welding torch 20. Then, arc discharge occurs between the tip of the welding wire 15 and the first member-to-be-welded 51 and the second member-to-be-welded 52, and a molten pool is formed at a welding point 55 between the edge part 51A of the first member-to-be-welded 51 and the surface 52B of the second member-to-be-welded 52, as shown in Fig. 2. In this way, arc welding is executed on the first member-to-be-welded 51 and the second member-to-be-welded 52.

After a predetermined welding time period has elapsed since application of a welding current or the like to the contact chip 20A has been started, the application of welding current or the like to the contact chip 20A is stopped. The process from the start to the stop of arc welding performed on the first member-to-be-welded 51 and the second member-to-be-welded 52 is defined as phase 1.

While arc welding performed on the first member-to-be-welded 51 and the second member-to-be-welded 52 is stopped, molten pool formed at the welding point 55 is cooled and solidified to form a weld bead. As shown in Fig. 3, while molten pool at the welding point 55 is cooled and solidified to form a weld bead, the welding torch 20 is moved along the edge part 51A of the first member-to-be-welded 51 by a predetermined distance D.

Arc welding performed on the first member-to-be-welded 51 and the second member-to-be-welded 52 is stopped, and after a predetermined time period has elapsed after stopping the arc welding (hereinafter referred to as welding stopped time period), arc welding is resumed by applying a welding current or the like to the contact chip 20A. The process from stopping the arc welding performed on the first member-to-be-welded 51 and the second member-to-be-welded 52 to resuming execution of the arc welding is defined as phase 2.

After phase 2 ends, phase 1 and phase 2 are repeatedly carried out to form a scaly weld bead, as shown in Fig. 4. Thus, in the welding method implemented by the welding apparatus according to the present disclosure, a phase of executing arc welding (phase 1) and a phase of stopping the arc welding (phase 2) are carried out alternately and repeatedly to thereby form a scaly weld bead.

Here, it is preferable that the time period of phase 1, i.e., a welding time period T1 in arc welding, and the time period of phase 2, i.e., a welding stopped time period T2 in arc welding, be at a given ratio. More specifically, the ratio of the welding time period T2 to the welding time period T1 (T2/T1) is preferably 0.2 to 2.0. By setting the ratio within this range, the molten pool is cooled and solidified while arc welding is being stopped to form a scaly weld bead, and the time period taken to form a weld bead of the required length can be shortened. In the case where the ratio (T2/T1) is less than 0.2, since the welding time period T2 to the welding time period T1 is short, molten pool may not be cooled or solidified while arc welding is being stopped, and the scaly weld bead may not be formed. In addition, in the case where the ratio (T2/T1) is more than 2.0, the welding time period T2 to the welding time period T1 is long, and it may take time to form a weld bead of a required length.

In addition, the ratio (T2/T1) can be changed within the range of 0.2 to 2.0 according to the welding conditions. For example, the ratio (T2/T1) can be changed according to how easily the molten metal forming the molten pool melts off. Specifically, in the case where the molten metal does not easily melt off, the ratio (T2/T1) can be reduced. In other words, the welding time period T2 to the welding time period T1 can be shortened. On the other hand, in the case where the molten metal easily melts off, the ratio (T2/T1) can be increased. In other words, the welding time period T2 to the welding time period T1 can be increased.

As an example of a case in which the molten metal does not easily melt off, there is a case in which the welding torch 20 is directed downward in the lap welding of the first member-to-be-welded 51 and the second member-to-be-welded 52, as shown in Fig. 5. In other words, it is a case in which a member-to-be-welded is located in the gravitational direction (Z direction in Fig. 5) of the molten pool formed by the arc discharge. Alternatively, there is a case in which the distance G between the edge part 51A of the first member-to-be-welded 51 and the edge part 52A of the second member-to-be-welded 52 is small in the butt welding of the first member-to-be-welded 51 and the second member-to-be-welded 52, as shown in Fig. 6.

As an example of a case in which the molten metal easily melts off, there is a case in which welding is performed with the welding torch 20 directed upward in performing the lap welding of the first member-to-be-welded 51 and the second member-to-be-welded 52, as shown in Fig. 7. In other words, there is no member-to-be-welded in the gravitational direction (Z-direction in Fig. 7) of the molten pool formed by the arc discharge. Alternatively, there is a case in which the distance G between the edge part 51A of the first member-to-be-welded 51 and the edge part 52A of the second member-to-be-welded 52 is large in the butt welding of the first member-to-be-welded 51 and the second member-to-be-welded 52, as shown in Fig. 6.

The welding time period T1, which is a time period determined in advance, is preferably set to 0.01 to 2.0 seconds, for example. Should the welding time period T1 be shorter than 0.01 seconds, the welding wire 15 may not melt and a molten pool may not be formed. Should the welding time period T1 be longer than 2.0 seconds, it may take time to form the weld bead of a required length. The welding time period T1 is an example of the "first time period, which is a predefined time period" in the present disclosure.

The welding time period T1 can be changed within the range of 0.01 to 2.0 seconds according to the welding conditions. For example, in the case where the thickness of the member-to-be-welded 50 is thick or the member-to-be-welded 50 is made of a material that is hard to melt, it is preferable to make the welding time period T1 relatively long.

The welding time period T2, which is predefined time period, is preferably set to 0.01 to 4.0 seconds, for example. Should the welding time period T2 be shorter than 0.01 seconds, the molten pool may not be cooled or solidified, and scaly weld bead may not be formed. Should the welding time period T2 be longer than 4.0 seconds, it may take time to form a weld bead of the required length. The welding time period T2 is an example of a "second time period, which is a predefined time period, for cooling the welding point formed by arc welding" of the present disclosure.

The distance D by which the welding torch 20 is moved during the period of phase 2 can be changed according to the welding conditions. For example, in the case where the strength of the weld part is desired to be high, the distance D should be relatively short.

Next, the arithmetic processing executed in the computation unit 63 of the control apparatus 60 will be described with reference to the flowchart of Fig. 8. Before executing the arithmetic processing, the operator inputs training data on the welding conditions to the configuration unit 61 of the control apparatus 60. The training data includes the welding time period T1 of arc welding, the welding stopped time period T2 of arc welding, the distance D by which the welding torch 20 is moved, and the required length L of the weld bead (hereinafter referred to as required weld bead length L). In the case where the input of the training data to the configuration unit 61 is completed and the member-to-be-welded 50 is arranged at a predetermined location, the arithmetic processing is started in the computation unit 63.

In Step 1 (hereinafter, referred to as "S1"; the same applies to other steps), arc welding is executed. In other words, a welding current and a welding voltage are applied to the contact chip 20A of the welding torch 20 from the power supply 30, and arc discharge is generated between the welding wire 15 and the member-to-be-welded 50 to form a molten pool at the welding point.

In Step S2, it is judged whether the predetermined welding time period T1 has elapsed after arc welding has been started. In the case where the welding time period T1 has not elapsed, arc welding is continued. In the case where the welding time period T1 has elapsed, the process proceeds to Step S3 to stop arc welding. That is, the application of a welding current or the like from the power supply 30 to the contact chip 20A is stopped.

Subsequently, in Step S4, the welding torch 20 is moved by a predetermined distance D.

Subsequently, in Step S5, it is determined whether the predetermined welding stopped time period T2 has elapsed after arc welding has been stopped. In the case where the welding stopped time period T2 has not elapsed, the welding process is continued to be stopped. In the case where the welding stopped time T2 has elapsed, the process proceeds to Step S6.

In Step S6, it is determined whether the total moving distance of the welding torch 20 has reached the required weld bead length L. In the case where the total moving distance of the welding torch 20 has not reached the required weld bead length L, the process returns to Step S1 and execution of arc welding is resumed. In the case where the total moving distance of the welding torch 20 has reached the required bead length L, arc welding is terminated.

In the conventional arc welding method, in order to form a weld bead of a required length, a linear weld bead is formed by performing continuous arc welding on the weld bead from the start position to the end position thereof. In this case, before the molten pool formed by the arc discharge is cooled and solidified, a large molten pool is formed next to the aforementioned molten pool due to the subsequent arc discharge, and there was a possibility that a molten metal could have melted off from this large molten pool.

In particular, in the case where welding is performed with the welding torch directed upward in performing the lap welding, as shown in Fig. 7, or in the case where the distance between two members-to-be-welded is large in the butt welding, as shown in Fig. 6, there was a possibility that a molten metal could have melted off from the molten pool.

In the welding method implemented by the welding apparatus according to the present disclosure, a phase of executing arc welding (phase 1) and a phase of stopping the arc welding (phase 2) are carried out alternately and repeatedly to thereby form a scaly weld bead. That is, after a molten pool is formed by the arc discharge, arc welding is stopped once to cool and solidify the molten pool, and then execution of arc welding is resumed. According to the welding method using welding apparatus of the present disclosure, since large molten pool is not formed, molten metal melt off can be suppressed.

In addition, by setting the ratio of the welding stopped time period T2 to the welding time period T1 (T2/T1) to 0.2 to 2.0, the molten pool is cooled and solidified while arc welding is being stopped to form a scaly weld bead, and the time taken to form a weld bead of the required length can also be shortened.

It should be noted that the present disclosure is not limited to the above-described embodiments, and may be modified as necessary without departing from the purport.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A welding apparatus (1), comprising:
an arc welding unit (20) configured to perform arc welding;
a moving mechanism (10) for moving the arc welding unit (20);
a control unit (60) configured to control execution of the arc welding and
movement by the moving mechanism (10), wherein
the control unit (60) is configured to:
execute the arc welding for a first time period, which is a predefined time period;
stop the arc welding for a second time period, which is predefined time period, so as to cool a welding point (55) formed by the arc welding; and
move the arc welding unit (20) and resume execution of the arc welding after lapse of the second time period.

2. The welding apparatus according to claim 1, wherein the ratio of the second time period to the first time period is 0.2 to 2.0.
